# EUROPÄISCHE PATENTSCHRIFT

(11) **EP 2 368 410 B1**
(45) Veröffentlichungstag und Bekanntmachung des Hinweises auf die Patenterteilung: **05.08.2015**
(21) Anmeldenummer: 09799099.8
(22) Anmeldetag: 21.12.2009
(51) Int. Cl.: H05B 41/282, H05B 33/08

(54) **VERFAHREN UND BETRIEBSGERÄT ZUM BETREIBEN EINES LEUCHTMITTELS MIT GEREGELTEM STROM**
METHOD AND OPERATING DEVICE FOR OPERATING A LIGHTING MEANS USING REGULATED CURRENT
PROCÉDÉ ET BALLAST POUR LE FONCTIONNEMENT D'UN MOYEN D'ÉCLAIRAGE AVEC UN COURANT RÉGULÉ

(30) Priorität: 22.12.2008 DE 102008064399
(43) Veröffentlichungstag der Anmeldung: 28.09.2011
(73) Patentinhaber: Tridonic GmbH & Co KG, 6851 Dornbirn (AT)
(72) Erfinder: KLIEN, Dietmar, A-6841 Mäder (AT); DWORATZEK, Dirk, A-6850 Dornbirn (AT)
(74) Vertreter: Rupp, Christian
(86) Internationale Anmeldenummer: PCT/EP2009/067652
(87) Internationale Veröffentlichungsnummer: WO 2010/072719

(56) Entgegenhaltungen:
- EP-A1- 1 424 881
- EP-A1- 1 689 215
- EP-A2- 1 768 468
- EP-B1- 0 876 742
- WO-A1-2008/029344
- JP-A- 2006 172 883
- US-A1- 2005 213 353
- Carl H. Sturm: "Betriebsgeräte und Schaltungen für elektrische Lampen: Vorschaltgeräte, Transformatoren, Schalter, Lampen und Leuchten. Normen", 1 January 1992 (1992-01-01), Publics Corporate Publishing ISBN: 3800915863 pages 68-68,

## Beschreibung

Die Erfindung betrifft ein Verfahren und ein Gerät zum Betreiben eines Leuchtmittels, mit geregelten Wechselstrom, der mittels eines Wechselrichters aus einer Betriebsgleichspannung erzeugt wird, wobei die über dem Leuchtmittel abfallende Spannung gemessen und für die Stromregelung ausgewertet wird.

Ein derartiges Verfahren ist nach der EP 0 876 742 B1 für Gasentladungslampen bekannt. In der genannten Druckschrift wird festgestellt, dass der in üblicherweise als Spannungsabfall über einen mit der Lampe in Serie geschalteten Shunt-Widerstand ermittelte Lampenstrom nicht zur Verwendung als Istwert für die Lampenstromregelung geeignet ist. Dies deshalb nicht, weil der durch den Shunt-Widerstand nicht nur der ohmsche Lampenstrom, sondern beim Erlöschen der Lampe zusätzlich noch ein kapazitiver Strom über die mehr oder weniger langen Zuleitungen fließt. Der durch den Shunt-Widerstand fließende Summenstrom ist deshalb gegenüber dem Lampenstrom phasenverschoben. Da insbesondere bei starkem Dimmen der kapazitive Stromanteil gegenüber dem ohmschen Stromanteil überwiegt, ist ein korrekter Dimmbetrieb nicht möglich. Bei dem bekannten Verfahren wird dieses Problem dadurch gelöst, dass bei der Gewinnung des Istwertes für die Stromregelung nur der Wirkanteil des gemessenen Stromes erfasst wird, indem ie Messung zu dem Zeitpunkt erfolgt, an dem die gleichfalls gemessene Lampenspannung ihren Scheitelwert erreicht hat.

Weiterer Stand der Technik kann den folgenden Druckschriften entnommen werden:
- Die europäische Patentanmeldung EP 1 768 468 A2 offenbart eine Beleuchtungsanordnung mit einer Entladungslampe hoher Intensität und ein Beleuchtungsgerät.
- Die europäische Patentanmeldung EP 1 689 215 A1 offenbart eine Leuchtvorrichtung und eine Beleuchtungsvorrichtung mit einer elektrodenlosen Entladungslampe.
- Die japanische Patentanmeldung JP 2006 172883 A offenbart eine Leuchtvorrichtung und eine Beleuchtungsvorrichtung mit einer Entladungslampe.
- Die europäische Patentanmeldung EP 1 424 881 A1 offenbart ein Verfahren zum Betrieb mindestens einer Niederdruckentladungslampe und ein Betriebsgerät für mindestens eine Niederdruckentladungslampe.
- Die europäische Patentschrift EP 0 876 742 B1 offenbart ein Verfahren und eine elektronische Steuerschaltung zum Regeln des Betriebsverhaltens von Gasentladungslampen.
- Die internationale Anmeldung WO 2008/029344 A1 offenbart eine Lampenbetriebsschaltung und ein Verfahren zum Betreiben einer Entladungslampe.
- Die amerikanische Patentanmeldung US 2005/0213353 A1 offenbart ein Verfahren und eine Vorrichtung zur Leistungssteuerung mindestens einer LED.

Der Erfindung liegt die Aufgabe zugrunde, für ein Verfahren der eingangs beschriebenen Art nach einer alternativen Möglichkeit zur Istwert-Bestimmung für den zu regelnden durch das Leuchtmittel fließenden Strom zu suchen.

Gemäß dem Kennzeichen des Anspruchs 1 ist die Aufgabe dadurch gelöst, dass der Istwert des Lampenstroms für die Regelung des Lampenstroms aus der dem Wechselrichter zugeführten Leistung und dem Spannungsabfall über dem Leuchtmittel ermittelt wird, wobei der Istwert des Lampenstroms dem Regelschaltungsteil auch zugeführt wird, um die Regelung des Lampenstroms durchzuführen. Der Istwert ergibt sich in einfacher Weise durch Quotientenbildung.

Die dem Wechselrichter zugeführte Leistung kann in einfacher Weise bei bekannter Betriebsgleichspannung durch Messung des durch den Wechselrichter fließenden Stromes ermittelt werden.

Wenn dem Wechselrichter ein Leistungsfaktor-Regler (PFC) vorgeschaltet ist, so kann die Ermittlung der dem Wechselrichter zugeführten Leistung auch dadurch erfolgen, dass mindestens ein Parameter des Leistungsfaktor-Reglers gemessen und zusammen mit bekannten Größen des Leistungsfaktor-Reglers ausgewertet wird.

Das Leuchtmittel kann beispielsweise eine Gasentladungslampe oder eine organische oder anorganische Leuchtdiode sein.

Die Erfindung betrifft ferner ein Betriebsgerät für ein Leuchtmittel, mit einer Betriebsgleichspannungsquelle, mit einem mit dieser verbundenen Wechselrichter, der mindestens einen getakteten Schalter enthält und den Wechselstrom für das Leuchtmittel erzeugt, mit Messmitteln für die über dem Leuchtmittel abfallende Spannung, und mit einem Regelschaltungsteil, dem das Spannungs-Messergebnis der Messmittel für die über das Leuchtmittel abfallende Spannung sowie ein Sollwert für den Lampenstrom zugeführt werden, und der unter Auswertung der ihm zugeführten Signale Stellwertsignale in Form der Taktfrequenz und/oder des Taktverhältnisses für den mindestens einen getakteten Schalter des Wechselrichters erzeugt.

Die EP 0 876 742 B1 beschreibt auch ein derartiges Betriebsgerät in Anwendung für eine Gasentladungslampe.

Das auch bei dem bekannten Betriebsgerät auftretende Problem und die in der genannten Druckschrift vorgeschlagene Lösung sind bereits oben in Verbindung mit dem bekannten Verfahren zu Betreiben eines Leuchtmittels mit geregeltem Wechselstrom geschildert worden. Für das Betriebsgerät ergibt sich die gleiche Aufgabe wie für das erfindungsgemäße Verfahren.

Die Lösung für das erfindungsgemäße Betriebsgerät ist gekennzeichnet durch Messmittel für die dem Wechselrichter zugeführte Leistung, die das Leistungs-Messergebnis dem Regelschaltungsteil zuführen, wobei der Regelschaltungsteil aus den beiden ihm zugeführten Messergebnissen einen Istwert für den dem Leuchtmittel zugeführten Lampenstrom ermittelt und mit dem Strom-Sollwert zur Erzeugung der Stellwertsignale für den mindestens einen getakteten Schalter vergleicht.

Eine zweckmäßige Ausgestaltung des erfindungsgemäßen Betriebsgerätes kann darin bestehen, dass die Messmittel für die dem Wechselrichter zugeführte Leistung bei bekannter Betriebsgleichspannung einen mit dem mindestens einen getakteten Schalter des Wechselrichters in Serie geschalteten Shunt-Widerstand umfassen, wobei der Spannungsabfall über diesen Shunt-Widerstand dem Regelschaltungsteil als Messergebnis für die dem Wechselrichter zugeführte Leistung verwendet wird.

Vorzugsweise wird der Wechselrichter von zwei in Serie geschalteten getakteten Schaltern gebildet, wobei der Verbindungspunkt mit den beiden Schaltern mit einem Serienresonanzkreis verbunden ist, und wobei das Leuchtmittel parallel zu dem Resonanzkondensator oder zu der Resonanzinduktivität geschaltet ist.

Die Messmittel für die über dem Leuchtmittel abfallende Spannung können - wie nach der EP 0 876 742 B1 bekannt -einen parallel zu dem Leuchtmittel geschalteten Spannungsteiler umfassen, wobei die über dem Teilerpunkt des Spannungsteilers abfallende Spannung dem Regelschaltungsteil als Spannungs-Messergebnis zugeführt wird.

Wenn - wie ebenfalls bekannt - die Betriebsgleichspannung für das Betriebsgerät durch Gleichrichtung der Netzspannung des Netzstromes mittels eines Gleichrichters erzeugt wird, und wenn zwischen den Gleichrichter und den Wechselrichter ein Leistungsfaktor-Regler (PFC) geschaltet ist, so können die Messmittel gemäß einer weiteren Ausgestaltung des erfindungsgemäßen Betriebsgerätes für die dem Wechselrichter zugeführte Leistung mindestens einen für die Leistungszuführung relevanten Parameter des Leistungsfaktor-Reglers erfassen und dem Reglerschaltungsteil zur Auswertung zuführen.

Wenn der Leistungsfaktor-Regler beispielsweise ein Hochsetzsteller mit einer in einem Längszweig liegenden Induktivität und einem in einem sich darin anschließenden Querzweig liegenden getakteten Schalter ist, so kann eine weitere zweckmäßige Ausgestaltung des Betriebsgerätes darin bestehen,
dass als auszuwertender Parameter die Eingangsspannung des Leistungsfaktor-Reglers ermittelt wird,
dass der Regelschaltungsteil auch die Taktfrequenz und/oder das Taktverhältnis für den getakteten Schalter des Leistungsfaktor-Reglers erzeugt,
und dass der Regelschaltungsteil aus der bekannten Induktivität und der bekannten Einschaltzeit des getakteten Schalters des Leistungsfaktor-Reglers die dem Wechselrichter zugeführte Leistung ermittelt.

Das mit dem Betriebsgerät zu betreibende Leuchtmittel kann von einer Gasentladungslampe oder einer organischen oder anorganischen Leuchtdiode gebildet sein.

Somit kann ein Beleuchtungssystem aufweisend zumindest ein erfindungsgemäßes Betriebsgerät ermöglicht werden.

Wenn das Leuchtmittel eine Leuchtdiode ist, so kann zwischen die Leuchtdiode und den Wechselrichter ein Transformator zur Potentialtrennung geschaltet werden, der zugleich die Funktion der Induktivität eines Serienresonanzkreises übernimmt, wobei die Leuchtdiode parallel zur Sekundärwicklung des Transformators geschaltet ist, und wobei der Resonanzkondensator in Serie mit der Primärwicklung des Transformators liegt.

Im letztgenannten Falle kann der Spannungsteiler zur Erfassung der über der Leuchtdiode abfallenden Spannung parallel zur Primärwicklung des Transformators geschaltet werden. Dies hat den Vorteil, dass bei Kenntnis des Übersetzungsverhältnisses des potentialtrennenden Transformators die Spannung auch primärseitig gemessen werden kann, womit eine Messung auf der potentialgetrennten Seite entfallen kann.

Ausführungsbeispiele der Erfindung werden nachfolgend anhand der Zeichnungen beschrieben.

Es zeigen:
- Figur 1: eine Schaltung für ein Betriebsgerät zum Betreiben einer Gasentladungslampe;
- Figur 2: eine Schaltung für ein Betriebsgerät bzw. einen Konverter zum Betreiben einer Leuchtdiode.

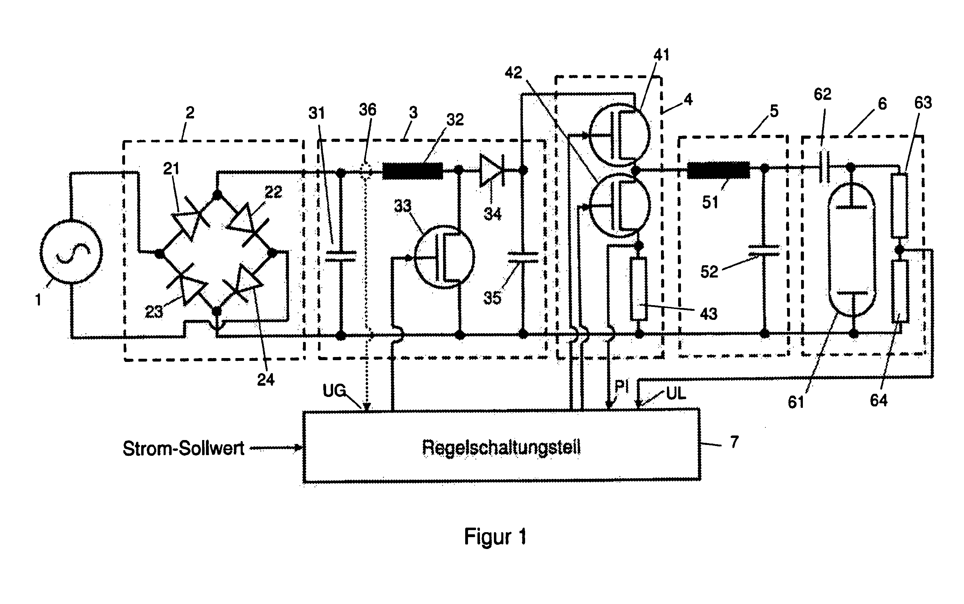

Das in Figur 1 gezeigte Betriebsgerät ist an das Wechselstromnetz 1 angeschlossen. Die Netzspannung wird mittels eines Gleichrichters 2 gleichgerichtet und einem Leistungsfaktor-Regler (PFC) 3 zugeführt. Dieser erzeugt eine Betriebsgleichspannung, welche in einem darauf folgenden Wechselrichter 4 in einen vorzugsweise hochfrequenten Betriebsstrom umgewandelt wird. Dieser wird einer Serienresonanzschaltung 5 zugeführt an deren Ausgang die Last 6 angeschlossen ist, die die Gasentladungslampe 61 enthält. Der Lampenstrom für die Gasentladungslampe 61 wird mittels eines Regelschaltungsteiles 7 geregelt.

Die einzelnen Blöcke der in Figur 1 gezeigten Schaltung sollen nun im Detail erläutert werden.

Der Gleichrichter 2 ist ein üblicher Brückengleichrichter mit vier Dioden 21 bis 24.

Der Leistungsfaktor-Regler 3 ist als Hochsetzsteller ausgebildet und enthält einen in einem ersten Querzweig liegenden Kondensator 31, der zum Glätten der von dem Gleichrichter 2 gleichgerichteten Netzspannung dient. In einem sich daran anschließenden Längszweig liegen in Serie eine Induktivität 32 und eine Diode 34. Von dem Verbindungspunkt zwischen der Induktivität 32 und der Diode 34 geht ein weiterer nach Masse verlaufender Querzweig aus, in dem sich ein getakteter elektronischer Schalter 33 befindet. Dessen Taktfrequenz und/oder Taktverhältnis wird durch die Regelschaltungsteil 7 eingestellt. In einem dritten Querzweig des Leistungsfaktor-Reglers 3 liegt ein Ladekondensator 35, über dem die Betriebsspannung für den dann folgenden Wechselrichter 4 abfällt.

Der Wechselrichter 4 ist eine Halbbrücke, die aus zwei in Serie liegenden und gegensinnig getakteten elektronischen Schaltern 41, 42 besteht. Die Stellwertsignale in Form der Taktfrequenz und/oder des Taktverhältnisses für die beiden elektronischen Schalter 41, 42 werden von dem Regelschaltungsteil 7 erzeugt und den Schaltern zugeführt. In Serie mit den beiden Schaltern 41, 42 liegt ein Shunt-Widerstand 43. Der Strom durch den Shunt-Widerstand erzeugt einen Spannungsabfall, der dem Regelschaltungsteil als Messwertsignal PI zugeführt wird. Dieses Messwertsignal PI ist bei Kenntnis der über dem Kondensator 35 abfallenden Betriebsspannung ein Maß für die der Last 6 zugeführte Leistung. Die über dem Kondensator 35 abfallende Betriebsspannung kann aufgrund der Einstellung des Leistungsfaktor-Reglers 3 festgelegt werden.

Der Serienresonanzkreis 5 besteht aus einer in einem Längszweig liegenden Resonanzinduktivität 51 und einem in einem sich daran anschließenden Querzweig befindlichen Resonanzkondensator 52. Die Spannung über dem Resonanzkondensator 52 wird der Last 6 zugeführt.

Die Last 6 enthält einen in einem Längszweig 62 befindlichen Koppelkondensator 62 und die sich in einem daran anschließenden Querzweig 61 befindliche Gasentladungslampe 61. Über der Gasentladungslampe 61 liegt ein aus zwei Widerständen gebildeter Spannungsteiler 63, 64. Die über dem Verbindungspunkt des Spannungsteilers abfallende Spannung wird dem Regelschaltungsteil 7 als Maß für die über die gesamte Gasentladungslampe 61 abfallende Spannung in Form des Messsignals UL zugeführt. Dem Regelschaltungsteil wird ferner ein Strom-Sollwert zugeführt. Der Strom-Sollwert kann, wenn die Lampe 61 gedimmt werden soll, extern erzeugt werden. Die Dimmung führt dazu, dass die Taktfrequenz und/oder das Taktverhältnis der Schaltsignale für die elektronischen Schalter 41, 42 des Wechselrichters 4 verändert werden.

Der Istwert für den Lampenstrom wird in dem Regelschaltungsteil 7 aus dem Messsignal PI, welches die dem Wechselrichter zugeführte Leistung repräsentiert, und dem Messsignal UL, welches die über der Lampe 61 abfallende Spannung repräsentiert, durch Quotientenbildung errechnet. Der so ermittelte Istwert für den Lampenstrom wird mit dem Strom-Sollwert verglichen, um daraus die vorstehend genannten Stellwerte für die elektronischen Schalter 41, 42 des Wechselrichters 4 zu erzeugen.

Alternativ zu der Messung der dem Wechselrichter 4 zugeführten Leistung durch Auswertung des Spannungsabfalls über dem Shunt-Widerstand 43 ist es auch möglich, dem Regelschaltungsteil 7 ein mittels eines Sensors 36 gemessenes Messwertsignal UG zuzuführen, welches die dem Leistungsfaktor-Regler 3 zugeführte Spannung repräsentiert. Aus dieser Eingangsspannung, der bekannten Induktivität 32 und der jeweiligen Einschaltzeit des getakteten Schalters 33 berechnet der Regelschaltungsteil 7 die Leistung, die der Leistungsfaktorregler 3 dem Wechselrichter 4 zuführt und welche der Wechselrichter 4 seinerseits an die Last 6 weiterleitet.

Da die Messmethode der Leistung über den Sensor 36 nur alternativ zu der Messmethode zur Anwendung kommt, die den Spannungsabfall über den Shunt-Widerstand 43 als Messsignal PI auswertet, sind der Sensor 36 und die Verbindungslinie von diesem zum Regelschaltungsteil 7 nur in gestrichelten Linien gezeichnet.

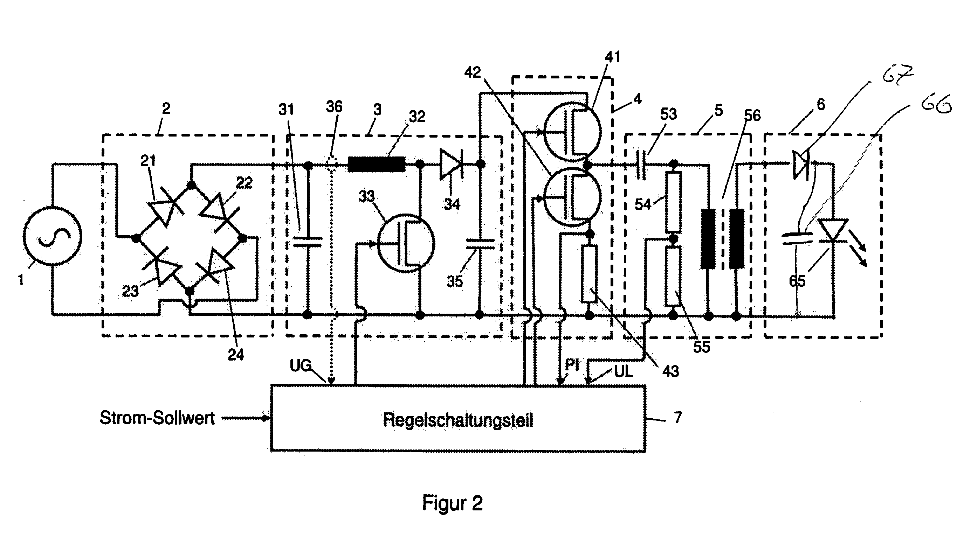

In Figur 2 sind für Schaltungsteile, die gleich mit denen von Figur 1 sind, die gleichen Bezugszeichen verwendet worden. Neu ist nur, dass die Last 6 hier von einer Leuchtdiode 65 gebildet ist, so dass das Betriebsgerät bzw. die Schaltung einen LED-Konverter bildet. Auch hier ist eine Stromregelung gefordert. Anstelle des Serienresonanzkreises 5 kann auch ein Parallelresonanzkreis oder ein Parallel-Serienresonanzkreis angewendet werden.

Neu an Figur 2 gegenüber Figur 1 ist ferner die Ausbildung des Serienresonanzkreises 5, der hier von einem in einem Längszweig liegenden Serienkondensator 53 und einer in einem Querzweig liegenden Serieninduktivität gebildet ist, welche ihrerseits als Transformator zur Potentialtrennung ausgebildet ist. Die Potentialtrennung ermöglicht es, dass ein Spannungsteiler 54, 55 zum Messen der über der Leuchtdiode 65 abfallenden Spannung auf der Primärseite des Transformators 56 angeordnet werden kann.

Die Last kann einen parallel zu der Leuchtdiode 65 (bzw. mehreren in Serie geschalteten LEDs) geschalteten Glättungskondensator 66 sowie eine Gleichtrichterdiode 67 aufweisen. Der Spannungsteiler 54, 55 zum Messen der über der Leuchtdiode 65 abfallenden Spannung kann aber auch auf der Sekundärseite des Transformators 56 , beispielsweise direkt über der Leuchtdiode 65, angeordnet werden. Über eine weitere Potentialtrennung kann das Ergebnis der Spannungsmessung an den Regelschaltungsteil 7 zugeführt werden. Es ist aber auch möglich, anstelle des Serienresonanzkreises 5 einen anderen Ausgangkreis anzuwenden, beispielsweise kann auch nur ein Transformator zur Potentialtrennung vorgesehen sein. Es können zur Ansteuerung des Leuchtmittels 65 auch andere Topologien wie beispielsweise ein Buck-Konverter, ein Buck-Boost-Konverter, ein Flyback-Konverter oder auch ein Forward-Konverter eingesetzt werden.

## Patentansprüche

1. Verfahren zum Betreiben eines Leuchtmittels (61, 65) mit einem Wechselstrom, der mittels eines Wechselrichters (4) aus einer Betriebsgleichspannung erzeugt wird, wobei einem Regelschaltungsteilein (7) ein Sollwert für einen Lampenstrom zugeführt wird,
**dadurch gekennzeichnet, dass**
ein Istwert des Lampenstroms für eine Regelung des Lampenstroms aus einer dem Wechselrichter (4) zugeführten Leistung und einem gemessenen Spannungsabfall über dem Leuchtmittel (61, 65) ermittelt wird, wobei der Istwert des Lampenstroms dem Regelschaltungsteil auch zugeführt wird, um die Regelung des Lampenstroms durchzuführen.

2. Verfahren nach Anspruch 1,
**dadurch gekennzeichnet,**
**dass** die dem Wechselrichter (4) zugeführte Leistung bei konstanter Betriebsgleichspannung durch Messung des durch den Wechselrichter (4) fließenden Stromes ermittelt wird.

3. Verfahren nach Anspruch 1,
wobei dem Wechselrichter (4) ein Leistungsfaktor-Regler (3) vorgeschaltet ist,
**dadurch gekennzeichnet,**
**dass** für die Ermittlung der dem Wechselrichter (4) zugeführten Leistung mindestens ein Parameter des Leistungsfaktor-Reglers (3) ausgewertet wird.

4. Verfahren nach einem der vorhergehenden Ansprüche,
**dadurch gekennzeichnet,**
**dass** der Wechselrichter (4) eine aus zwei in Serie geschalteten getakteten Schaltern (41, 42) bestehende Halbbrückenschaltung ist.

5. Verfahren nach einem der vorhergehenden Ansprüche,
**dadurch gekennzeichnet,**
**dass** das Leuchtmittel eine Gasentladungslampe (61) oder eine Leuchtdiode (65) ist

6. Betriebsgerät für ein Leuchtmittel (61, 65),
mit einer Betriebsgleichspannungsquelle (3),
mit einem mit dieser verbundenen Wechselrichter (4), der mindestens einen getakteten Schalter (41, 42) enthält und einen Wechselstrom für das Leuchtmittel erzeugt,
mit Messmitteln für die über dem Leuchtmittel (61, 65) abfallende Spannung,
mit einem Regelschaltungsteil (7), dem ein Spannungs-Messergebnis der Messmittel für die über das Leuchtmittel (61, 65) abfallende Spannung sowie ein Sollwert für den Lampenstrom zugeführt werden, und der unter Auswertung der ihm zugeführten Signale Stellwertsignale in Form der Taktfrequenz und/oder des Taktverhältnisses für den mindestens einen getakteten Schalter (41, 42) des Wechselrichters (4) erzeugt,
**gekennzeichnet durch**
Messmittel für die dem Wechselrichter (4) zugeführte Leistung, die ein Leistungs-Messergebnis dem Regelschaltungsteil (7) auch zuführen,
wobei der Regelschaltungsteil aus den beiden ihm zugeführten Messergebnissen einen Istwert für den dem Leuchtmittel (61, 65) zugeführten Lampenstrom ermittelt und mit dem sollwert für den lampenstrom zur Erzeugung der Stellwertsignale für den mindestens einen getakteten Schalter (41, 42) vergleicht.

7. Betriebsgerät nach Anspruch 6,
**dadurch gekennzeichnet,**
**dass** die Messmittel für die dem Wechselrichter (4) zugeführte Leistung bei bekannter Betriebsgleichspannung einen mit dem mindestens einen getakteten Schalter (41, 42) des Wechselrichters (4) in Serie geschalteten Shunt-Widerstand (43) umfassen,
wobei der Spannungsabfall über diesen Shunt-Widerstand (43) dem Regelschaltungsteil (7) als Messsignal für die dem Wechselrichter (4) zugeführte Leistung verwendet wird.

8. Betriebsgerät nach einem der Ansprüche 6 oder 7,
**dadurch gekennzeichnet,**
**dass** die Messmittel für die über dem Leuchtmittel (61, 65) abfallende Spannung einen parallel zu dem Leuchtmittel geschalteten Spannungsteiler (63, 64; 54, 55) umfassen, und dass die an dem Teilungspunkt des Spannungsteilers abfallende Spannung dem Regelschaltungsteil (7) als Spannungs-Messergebnis zugeführt wird.

9. Betriebsgerät nach einem der Ansprüche 6 oder 8,
bei dem die Betriebsgleichspannung durch Gleichrichtung der Netzspannung des Stromnetzes (1) mittels eines Gleichrichters (2) erzeugt wird,
und bei dem zwischen dem Gleichrichter (2) und dem Wechselrichter (4) ein Leistungsfaktor-Regler (3) geschaltet ist,
**dadurch gekennzeichnet,**
**dass** die Messmittel für die dem Wechselrichter zugeführte Leistung mindestens einen für die Leistungszuführung relevanten Parameter (UG) des Leistungsfaktor-Reglers (3) erfassen und dem Regelschaltungsteil (7) zur Auswertung zuführen.

10. Betriebsgerät nach Anspruch 9,
bei dem der Leistungsfaktor-Regler (3) ein Hochsetzsteller mit einer in einem Längszweig liegenden Induktivität (32) und einem in einem sich daran anschließenden Querzweig liegenden getakteten Schalter (33) ist,
**dadurch gekennzeichnet,**
**dass** als auszuwertender Parameter die Eingangsspannung (UG) des Leistungsfaktor-Reglers (3) ermittelt wird,
**dass** der Regelschaltungsteil (7) die Taktfrequenz und/oder das Taktverhältnis für den getakteten Schalter (33) des Leistungsfaktor-Reglers (3) erzeugt,
und **dass** der Regelschaltungsteil (7) aus der eingangsspannung (UG) des leistungsfaktor-reglers (3), der Induktivität (32) und der bekannten Einschaltzeit des getakteten Schalters (33) des Leistungsfaktor-Reglers (3) die dem Wechselrichter zugeführte Leistung ermittelt.

11. Betriebsgerät nach einem der Ansprüche 6 bis 10,
**dadurch gekennzeichnet,**
**dass** das Leuchtmittel von einer Gasentladungslampe (61) oder einer Leuchtdiode (65) gebildet ist.

12. Betriebsgerät nach einem der Ansprüche 6 bis 11,
**dadurch gekennzeichnet,**
**dass** der Wechselrichter (4) von zwei in Serie geschalteten getakteten Schaltern (41, 42) gebildet ist, und dass der Verbindungspunkt mit den beiden Schaltern mit einem Serienresonanzkreis (5) verbunden ist,
wobei das Leuchtmittel (61, 65) parallel zu einem Resonanzkondensator (52) oder zu einer Resonanzinduktivität (56) geschaltet ist.

13. Betriebsgerät nach einem der Ansprüche 6 bis 10,
bei dem das Leuchtmittel eine Leuchtdiode (65) ist,
**dadurch gekennzeichnet,**
**dass** zwischen die Leuchtdiode (65) und den Wechselrichter (4) ein Transformator (56) zur Potentialtrennung geschaltet ist, der zugleich die Funktion einer Resonanzinduktivität eines Serienresonanzkreises (53, 56) übernimmt,
**dass** die Leuchtdiode (65) parallel zu einer Sekundärwicklung des Transformators (56) geschaltet ist), und dass der Resonanzkondensator (53) in Serie mit einer Primärwicklung des Transformators (56) liegt.

14. Betriebsgerät nach Anspruch 13,
**dadurch gekennzeichnet,**
**dass** der Spannungsteiler (54, 55) zur Erfassung der über einer Leuchtdiode (65) abfallenden Spannung parallel zur Primärwicklung des Transformators (56) geschaltet ist.

15. Beleuchtungssystem aufweisend ein Betriebsgerät nach einem der vorangegangenen Ansprüche 6 bis 14.

## Claims

1. A method for operating a lighting means (61, 65) with an alternating current, which is generated by means of an inverter (4) from an operating direct voltage, wherein a control circuit section (7) is fed a desired value for a lamp current,
**characterized in that**
an actual value of the lamp current for a regulation of the lamp current is determined from a power output fed to the inverter (4) and a measured voltage drop across the lighting means (61, 65), wherein the actual value of the lamp current is also fed to the control circuit section, in order to carry out the regulation of the lamp current.

2. A method according to claim 1,
**characterized in**
**that** the power output fed to the inverter (4) in the case of constant operating direct voltage is determined by measurement of the current flowing through the inverter (4).

3. A method according to claim 1,
wherein a power-factor controller (3) is located upstream from the inverter (4),
**characterized in**
**that** for the determination of the power fed to the inverter (4) at least one parameter of the power-factor controller (3) is evaluated.

4. A method according to one of the preceding claims,
**characterized in**
**that** the inverter (4) is a half bridge circuit consisting of two clocked switches (41, 42) connected in series.

5. A method according to one of the preceding claims,
**characterized in**
**that** the lighting means is a gas-discharge lamp (61) or a light-emitting diode (65).

6. An operating device for a lighting means (61, 65), with an operating direct voltage source (3), with an inverter (4) connected to the latter, which contains at least one clocked switch (41, 42) and generates an alternating current for the lighting means, with measuring devices for the voltage dropping across the lighting means (61, 65), with a control circuit section (7), to which a voltage measurement result of the measuring device for the voltage dropping across the lighting means (61, 65) as well as a desired value for the lamp current are fed, and which by evaluating the signals fed to it generates control value signals in the form of the clock frequency and/or the clock ratio for the at least one clocked switch (41, 42) of the inverter (4),
**characterized by**
measuring devices for the power output fed to the inverter (4), which also feed a power measurement result to the control circuit section (7),
wherein the control circuit section determines an actual value for the lamp current fed to the lighting means (61, 65) from the two measurement results fed to it and compares it with the desired value for the lamp current for the generation of the control value signals for the at least one clocked switch (41, 42).

7. An operating device according to claim 6,
**characterized in**
**that** the measuring devices for the power output fed to the inverter (4) in the case of the known operating direct voltage comprise a shunt resistor (43) connected in series with the at least one clocked switch (41, 42) of the inverter (4),
wherein the voltage drop across this shunt resistor (43) to the control circuit section (7) is used as a measuring signal for the power output fed to the inverter (4).

8. An operating device according to one of claims 6 or 7,
**characterized in**
**that** the measuring devices for the voltage dropping across the lighting means (61, 65) comprise a voltage divider (63, 64; 54, 55) connected in parallel to the lighting means,
and **that** the voltage dropping to the division point of the voltage divider is fed to the control circuit section (7) as a voltage measurement result.

9. An operating device according to one of claims 6 or 8,
in which the operating direct voltage is generated by rectification of the supply voltage of the electricity grid (1) by means of a rectifier (2),
and in which a power-factor controller (3) is connected between the rectifier (2) and the inverter (4),
**characterized in**
**that** the measuring devices for the power output fed to the inverter detect at least one parameter (UG) of the power-factor controller (3) relevant to the power supply and feed it to the control circuit section (7) for evaluation.

10. An operating device according to claim 9,
In which the power-factor controller (3) is a step-up converter with an inductor (32) located in a series circuit and with a clocked switch (33) located in a shunt circuit connected to it,
**characterized in**
**that** as a parameter to be evaluated the input voltage (UG) of the power-factor controller (3) is determined,
**that** the control circuit section (7) generates the clock frequency and/or the clock ratio for the clocked switch (33) of the power-factor controller (3),
and **that** the control circuit section (7) determines the power output fed to the inverter from the input voltage (UG) of the power-factor controller (3), the inductor (32) and the known closing time of the clocked switch (33) of the power-factor controller (3).

11. An operating device according to one of claims 6 to 10,
**characterized in**
**that** the lighting means is formed by a gas discharge lamp (61) or a light-emitting diode (65).

12. An operating device according to one of claims 6 to 11,
**characterized in**
**that** the inverter (4) is formed from two clocked switches (41, 42) connected in series, and that the point of connection with the two switches is connected to a series-resonant circuit (5),
wherein the lighting means (61, 65) is connected in parallel to a resonance capacitor (52) or to a resonance inductor (56).

13. An operating device according to one of claims 6 to 10,
in which the lighting means is a light-emitting diode (65),
**characterized in**
**that** between the light-emitting diode (65) and the inverter (4) a transformer (56) is connected for electrical isolation, which at the same time assumes the function of a resonance inductor of a series-resonant circuit (53, 56),
**that** the light-emitting diode (65) is connected in parallel to a secondary winding of the transformer (56), and that the resonance capacitor (53) is in series with a primary winding of the transformer (56).

14. An operating device according to claim 13,
**characterized in**
**that** the voltage divider (54, 55) for detection of the voltage dropping across a light-emitting diode (65) is connected in parallel to the primary winding of the transformer (56).

15. A lighting system having an operating device according to one of the preceding claims 6 to 14.

## Revendications

1. Procédé pour le fonctionnement d'un moyen d'éclairage (61, 65) avec un courant alternatif, qui est généré par un onduleur (4) à partir d'une tension continue d'alimentation, une valeur de consigne pour le courant d'une lampe étant acheminée vers un élément de circuit de réglage (7),
**caractérisé en ce que**
une valeur réelle du courant de la lampe est déterminée, pour un réglage du courant de la lampe, à partir d'une puissance acheminée vers l'onduleur (4) et d'une chute de tension mesurée sur le moyen d'éclairage (61, 65), la valeur réelle du courant de la lampe étant également acheminée vers l'élément de circuit de réglage afin d'effectuer le réglage du courant de la lampe.

2. Procédé selon la revendication 1, **caractérisé en ce que** la puissance acheminée vers l'onduleur (4) est déterminée en présence d'une tension continue d'alimentation constante par la mesure du courant circulant à travers l'onduleur (4).

3. Procédé selon la revendication 1, un régulateur du facteur de puissance (3) étant monté en amont de l'onduleur (4), **caractérisé en ce qu'**au moins un paramètre du régulateur du facteur de puissance (3) est analysé pour déterminer la puissance acheminée vers l'onduleur (4).

4. Procédé selon l'une quelconque des revendications précédentes, **caractérisé en ce que** l'onduleur (4) est un circuit en demi-pont constitué de deux commutateurs (41, 42) cadencés, montés en série.

5. Procédé selon l'une quelconque des revendications précédentes, **caractérisé en ce que** le moyen d'éclairage est une lampe à décharge (61) ou une diode électroluminescente (65).

6. Ballast pour un moyen d'éclairage (61, 65), comportant
une source de tension continue d'alimentation (3),
un onduleur (4) relié à cette dernière, lequel contient au moins un commutateur (41, 42) cadencé et génère un courant alternatif pour le moyen d'éclairage,
des moyens de mesure pour la tension chutant sur le moyen d'éclairage (61, 65),
un élément de circuit de réglage (7), vers lequel sont acheminés un résultat de mesure des moyens de mesure pour la tension chutant sur le moyen d'éclairage (61, 65) et une valeur de consigne pour le courant de la lampe, et lequel, moyennant l'analyse des signaux acheminés vers lui, génère des signaux de valeur de réglage sous la forme de la fréquence élémentaire et/ou du rapport cyclique pour ledit au moins un commutateur (41, 42) cadencé de l'onduleur (4),
**caractérisé par**
des moyens de mesure pour la puissance acheminée vers l'onduleur (4), par lesquels un résultat de mesure de la puissance est acheminé vers l'élément de circuit de réglage (7),
l'élément de circuit de réglage déterminant à partir des deux résultats de mesure acheminés vers lui, une valeur réelle pour le courant de la lampe acheminé vers le moyen d'éclairage (61, 65), et la comparant à la valeur de consigne pour le courant de la lampe afin de générer les signaux de valeur de réglage pour ledit au moins un commutateur (41, 42) cadencé.

7. Ballast selon la revendication 6, **caractérisé en ce que** les moyens de mesure de la puissance acheminée vers l'onduleur (4) en présence d'une tension continue d'alimentation connue comportent une résistance shunt (43), montée en série avec ledit au moins un commutateur (41, 42) cadencé de l'onduleur (4), la chute de tension acheminée via ladite résistance shunt (43) vers l'élément de circuit de réglage (7) étant utilisée comme signal de mesure pour la puissance acheminée vers l'onduleur (4).

8. Ballast selon la revendication 6 ou 7, **caractérisé en ce que** les moyens de mesure de la tension chutant sur le moyen d'éclairage (61, 65) comportent un diviseur de tension (63, 64 ; 54, 55) monté en parallèle avec le moyen d'éclairage, et **en ce que** la chute de tension se produisant au niveau du point de séparation du diviseur de tension est acheminée vers l'élément de circuit de réglage (7) sous forme de résultat de mesure de la tension.

9. Ballast selon la revendication 6 ou 8, dans lequel la tension continue d'alimentation est générée au moyen d'un redresseur (2) par le redressement de la tension du réseau électrique (1), et dans lequel un régulateur du facteur de puissance (3) est monté entre le redresseur (2) et l'onduleur (4),
**caractérisé en ce que**
les moyens de mesure de la puissance acheminée vers l'onduleur détectent au moins un paramètre (UG), significatif pour l'acheminent de la puissance, du régulateur du facteur de puissance (3) et acheminent ledit paramètre vers l'élément de circuit de réglage (7) en vue de son analyse.

10. Ballast selon la revendication 9, dans lequel le régulateur du facteur de puissance (3) est un convertisseur élévateur avec une inductance (32), située dans une branche longitudinale, et avec un commutateur (33) cadencé, situé dans une branche transversale adjacente à celle-ci,
**caractérisé**
**en ce que** la tension d'entrée (UG) de l'élément de circuit de réglage (7) est déterminée en tant que paramètre à analyser,
**en ce que** l'élément de circuit de réglage (7) génère la fréquence élémentaire et/ou le rapport cyclique pour le commutateur (33) cadencé du régulateur du facteur de puissance (3),
et **en ce que** l'élément de circuit de réglage (7) détermine la puissance acheminée vers l'onduleur à partir de la tension d'entrée (UG) du régulateur du facteur de puissance (3), de l'inductance (32) et du temps de connexion connu du commutateur (33) cadencé du régulateur du facteur de puissance (3).

11. Ballast selon l'une quelconque des revendications 6 à 10, **caractérisé en ce que** le moyen d'éclairage est formé par une lampe à décharge (61) ou une diode électroluminescente (65).

12. Ballast selon l'une quelconque des revendications 6 à 11, **caractérisé en ce que** l'onduleur (4) est constitué de deux commutateurs (41, 42) cadencés, montés en série, et **en ce que** le point de liaison est relié aux deux commutateurs par un circuit de résonance série (5), le moyen d'éclairage (61, 65) étant monté en parallèle à un condensateur de résonance (52) ou à une inductance de résonance (56).

13. Ballast selon l'une quelconque des revendications 6 à 10, dans lequel le moyen d'éclairage est une diode électroluminescente (65),
**caractérisé**
**en ce qu'**entre la diode électroluminescente (65) et l'onduleur (4) est monté un transformateur (56) pour la séparation de potentiel, lequel remplit en même temps la fonction d'une inductance de résonance d'un circuit de résonance série (53, 56),
**en ce que** la diode électroluminescente (65) est montée en parallèle à un enroulement secondaire du transformateur (56),
et **en ce que** le condensateur de résonance (53) est monté en série à un enroulement primaire du transformateur (56).

14. Ballast selon la revendication 13, **caractérisé en ce que** le diviseur de tension (54, 55) pour déterminer la tension chutant sur une diode électroluminescente (65) est monté en parallèle à l'enroulement primaire du transformateur (56).

15. Système d'éclairage comportant un ballast selon l'une des revendications 6 à 14.
